# EUROPÄISCHE PATENTANMELDUNG

(11) **EP 2 357 416 A2**
(43) Veröffentlichungstag der Anmeldung: **17.08.2011**
(21) Anmeldenummer: 11154371.6
(22) Anmeldetag: 14.02.2011
(51) Int. Cl.: F24D 3/18, F24D 11/02

(54) **Heizungsanlage mit Wärmepumpe**

(30) Priorität: 15.02.2010 DE 102010008114
(71) Anmelder: Gehring, Wolfgang, 97725 Elfershausen (DE)
(72) Erfinder: Gehring, Wolfgang, 97725 Elfershausen (DE)
(74) Vertreter: von den Steinen, Axel

(57) **Zusammenfassung**

Die Erfindung betrifft eine Heizungsanlage zur Übertragung von Wärmeenergie mit einer Wärmepumpe, umfassend zumindest drei getrennte Kreisläufe,
- wobei in einem Kühlkreislauf ein Kühlmedium zirkuliert,
- wobei in einem Pumpkreislauf, realisiert durch eine Wärmepumpe, ein Pumpmedium zirkuliert, und
- wobei in einem Heizkreislauf ein Heizmedium zirkuliert,
wobei Wärmeenergie vom Kühlmedium zum Pumpmedium und vom Pumpmedium zum Heizmedium übertragen werden kann,
wobei das Kühlmedium aus einem Stoffgemisch besteht, wobei das Stoffgemisch Paraffin enthält, und wobei das Stoffgemisch einen Schmelzpunkt von unter 25°C besitzt.

## Beschreibung

Die Erfindung betrifft eine Heizungsanlage, bei der mittels einer Wärmepumpe Wärmeenergie aus insbesondere natürlichen Wärmequellen aus einem Kühlkreislauf in einen Wärmekreislauf übertragen wird. Hierbei wird ein Stoffgemisch mit Paraffin im Kühlkreislauf zur Erhöhung des Wirkungsgrades eingesetzt.

Wärmepumpen zur Gewinnung von Wärmeenergie aus einer kälteren Prozessseite und zur Übertragung der Wärmeenergie auf eine heißere Prozessseite sind aus dem Stand der Technik hinlänglich bekannt. Hierbei wird ein Pumpmedium in einem Kreislauf gefördert. Das Pumpmedium ist in aller Regel ein Stoff, welcher sowohl flüssig als auch gasförmig innerhalb des Anwendungsbereiches vorliegt. Mittels eines Kompressors wird das gasförmige Pumpmedium stark verdichtet. Hierbei steigt die Temperatur des Pumpmediums stark an. Das Pumpmedium wird im Folgenden durch einen Verflüssiger geleitet, bei dem Wärmeenergie vom Pumpmedium abgegeben wird. Hierbei wird das Pumpmedium flüssig und in diesem Zustand unter weiterhin hohem Druck weiter gefördert bis zu einem Expansionsventil. Dort entspannt das Pumpmedium auf einen deutlich geringeren Druck. In Folge dessen kühlt das ohnehin nach dem Verflüssiger abgekühlte Pumpmedium weiter stark ab. Dieses kalte Pumpmedium wird dann durch einen Verdampfer geleitet, in dem das Pumpmedium Wärmeenergie aufnimmt und in den gasförmigen Zustand wechselt. Im Kreislauf folgend liegt wiederum der Kompressor.

Die Funktionsweise von Wärmepumpen kann zur Kühlung der Kaltseite oder zur Heizung der Warmseite (oder beides zugleich) eingesetzt werden. In jedem Falle wird mittels der Wärmepumpe Wärmeenergie mittels des Pumpmediums vom Verdampfer zum Verflüssiger geleitet.

Bei der üblichen Arbeitsweise in einer Heizungsanlage wird die Wärmepumpe zur Wärmegewinnung eingesetzt. In diesem Falle folgt in aller Regel auf der Warmseite der Wärmepumpe ein Heizkreislauf mittels dem eine Raumbeheizung ermöglicht wird. Auf der Kaltseite der Wärmepumpe liegt ein Kühlkreislauf, dessen Aufgabe die Aufnahme von Wärmeenergie ist. Aus dem Stand der Technik sind verschiedene Anwendungen und Ausführungen für den Kühlkreislauf bekannt. Eine häufig anzutreffende Wirkungsweise ist die Verwendung mit einer Erdwärmesonde. In diesem Falle wird im Kühlkreislauf die Wärmeenergie dem Erdreich entnommen, welche weitgehend über das ganze Jahr eine konstante Temperatur aufweist. Die Erdwärmesonde bildet einen Wärmetauscher, durch den das Kühlmedium im Kreislauf geleitet wird. Im Stand der Technik wird der Kühlkreislauf in aller Regel mit einem Kühlmedium aus einem Stoffgemisch mit Wasser und Glykol betrieben. Dieses Stoffgemisch stellt zum einen sicher, dass es bei Temperaturen leicht unterhalb des Gefrierpunktes nicht erstarrt. Zum anderen ist dieses Stoffgemisch kostengünstig und einfach in der Handhabung.

Jedoch besitzt Wasser nur eine relativ geringe Wärmekapazität von ca. 4,2 kJ/kg. Daher ist zur Übertragung und zum Transport der geforderten Wärmeenergie ein vergleichsweise hoher Umlauf des Kühlmediums notwendig. Des Weiteren bedarf es somit einer großen Wärmetauscherfläche. Diese ist jedoch bei den Erdwärmesonden zum einen in der zugänglichen Grundstücksfläche begrenzt und in der alternativen Ausführung als Tiefenbohrung in deren hohen Kosten.

Um den Gesamtwirkungsgrad der Heizungsanlage steigern zu können und insbesondere die notwendige Größe der Erdwärmesonde bei gleicher Wärmeleistung reduzieren zu können, ist es erforderlich, die Wärmekapazität des Kühlmediums zu erhöhen. Jedoch besitzen auch andere Flüssigkeiten keine nennenswert höheren Wärmekapazitäten als die von flüssigem Wasser. Bekannt ist, dass Wasser im Phasenübergang von fest bzw. gefroren nach flüssig eine sehr viel höhere Wärmeenergie speichern bzw. freisetzen kann. Bekanntlich ist es jedoch nicht möglich, gefrorenes Wasser in einem Kreislauf zu fördern.

Insofern ist es Aufgabe der vorliegenden Erfindung, den Gesamtwirkungsgrad einer Heizungsanlage mit Wärmepumpe zu erhöhen und zugleich den Aufwand, d.h. die notwendige Baugröße, für Erdwärmesonden zu verringern.

Die Aufgabe wird durch die erfindungsgemäße Lösung nach Anspruch 1 gelöst. Das erfindungsgemäße Verfahren zur Lösung der Aufgabe ist in Anspruch 11 angegeben.

Vorteilhafte Ausführungsformen sind Gegenstand der Unteransprüche.

Eine Heizungsanlage zur Übertragung von Wärmeenergie mit einer Wärmepumpe umfasst zumindest drei getrennte Kreisläufe. In einem Kühlkreislauf zirkuliert ein Kühlmedium und in einem Pumpkreislauf, realisiert durch eine Wärmepumpe, ein Pumpmedium und in einem Heizkreislauf ein Heizmedium. Hierbei kann Wärmeenergie vom Kühlmedium zum Pumpmedium und vom Pumpmedium zum Heizmedium übertragen werden.

Der Aufbau und die Arbeitsweise einer Wärmepumpe sind dem Fachmann wohl bekannt und bedürfen keiner genauen Erläuterung. Zumindest umfasst eine Wärmepumpe und somit der Pumpkreislauf einen Kompressor, einen Verflüssiger, ein Expansionsventil und einen Verdampfer. Im Verdampfer kann Wärmeenergie auf das Pumpmedium übertragen werden, wobei das Pumpmedium in der Regel vom flüssigen Zustand in den gasförmigen Zustand wechselt. Mittels des Kompressors erfolgen eine Druckerhöhung und zugleich eine deutliche Erhöhung der Temperatur des Pumpmediums. Im Verflüssiger kann die Wärmeenergie wieder abgegeben werden.

Ein Kühlkreislauf umfasst zumindest eine Umwälzpumpe, einen Aufnahme-Wärmetauscher und einen Abgabe-Wärmetauscher, wobei Wärmeenergie im Aufnahme-Wärmetauscher auf das Kühlmedium übertragen werden kann und im Abgabe-Wärmetauscher abgegeben werden kann.

Ein Heizkreislauf umfasst zumindest einen Erhitzer und eine Heizeinrichtung, wobei im Erhitzer Wärmeenergie auf das Heizmedium übertragen werden kann und von der Heizeinrichtung abgegeben werden kann.

Insofern entspricht dieser Aufbau der aus dem Stand der Technik bekannten Lösung zur Gewinnung von Wärmeenergie aus natürlichen Wärmequellen.

Es ist für den Fachmann offensichtlich, dass diese Wirkungsweise gleichfalls für Kühlzwecke eingesetzt werden kann. Hierbei wird der Kühlkreislauf mit dem Aufnahme-Wärmtauscher im zu kühlenden Bereich eingesetzt, wohingegen der Heizkreislauf im Bereich angeordnet ist, an dem die Wärme abgegeben werden soll. Somit ist es denkbar, einen Winter-Kühlkreislauf bei Heizphasen zu schalten, wobei in diesem Falle die Wärmeenergie aus Erdwärmesonden gewonnen wird. Zu der Jahreszeit, bei der die Wohnräume oder dergleichen gekühlt werden sollen, können über Aufnahme-Wärmetauscher in den Räumen Wärmeenergie entzogen werden. Diese könnte z.B. zur Wiedergewinnung im Winter in Langzeit-Wärmespeicher übertragen werden. Aus der Anwendung der Gebäudeklimatisierung kann man die erfindungsgemäße Lösung aber auch auf andere Kühl- und Heizzwecke übertragen, wie z.B. Kühlhäuser.

Die erfinderische Lösung besteht in der Verwendung eines Stoffgemisches im Kühlkreislauf, wobei das Stoffgemisch Paraffin enthält. Hierdurch wird es ermöglicht, sowohl den Gesamtwirkungsgrad zu erhöhen, als auch die notwendige Baugröße bzw. Oberfläche des Aufnahme-Wärmetauschers zu reduzieren.

Durch die erfindungsgemäße Lösung mit der Verwendung eines Stoffgemisches mit Paraffin reduzieren sich die Kosten und der erforderliche Bauraum für den Aufnahme-Wärmetauscher. Im typischen Anwendungsfall mit dem Einsatz einer Erdwärmesonde reduziert sich deren notwendige Baugröße und somit wird es in einigen Fällen erst hierdurch ermöglicht, eine Erdwärmesonde zur Energiegewinnung einzusetzen.

Zum zweiten reduziert sich der notwendige Volumenstrom des Kühlmediums im Kühlkreislauf. Insofern ist eine kleinere Umwälzpumpe ausreichend, die mit geringeren Drehzahlen bzw. Antriebsgeschwindigkeiten betrieben werden kann. Somit reduziert sich in aller Regel der Stromverbrauch für den Betrieb der Umwälzpumpe und trägt somit zur Steigerung des Gesamt-Wirkungsgrades bei.

Die Wirkungsweise wird durch eine gegenüber flüssigem Wasser erheblich höhere Wärmespeicherfähigkeit des Stoffgemisches mit Paraffin erreicht. Die Wärmespeicherkapazität ist erfindungsgemäß höher als 20 kJ/kg ab einer Grenztemperatur, die zwischen -5°C und 25°C liegt. Vorteilhafter Weise wird ein Stoffgemisch eingesetzt, dessen Wärmespeicherkapazität höher als 120 kJ/kg, insbesondere höher als 150 kJ/kg, ist. Bei einem Verwendungszweck der Heizungsanlage zur Energiegewinnung aus dem Kühlkreislauf liegt die Grenztemperatur vorzugsweise zwischen 0°C und 10°C. Bei der Verwendung der Heizungsanlage zur Kühlung, z.B. von Gebäuden, liegt die Grenztemperatur vorzugsweise zwischen 15°C und 25°C.

Mittels einer Phasenumwandlung des Paraffins von fest nach flüssig speichert das Paraffin die sehr hohe Wärmekapazität. Aufgrund des Stoffgemisches ist dieses trotz teilweise festen Paraffins unverändert in einem Kühlkreislauf transportierbar. Zu diesem Zwecke wird vorteilhafter Weise die Temperatur nach dem Abgabe-Wärmetauscher in einem Temperaturbereich eingestellt, bei dem das Paraffin einen weitgehenden, aber nicht vollständig festen Zustand besitzt.

Bekanntlich erfolgen die Wärmelieferung und insbesondere der Wärmeverbrauch nicht kontinuierlich. Die Verwendung eines Stoffgemisches mit Paraffin im Kühlkreislauf und die Nutzung der vorteilhaften Wärmespeicherkapazität des Paraffins erfordern möglichst konstante Temperaturprofile. Daher ist es vorteilhaft, wenn der Kühlkreislauf in seiner Temperatur stabilisiert werden kann. Für diese Zwecke sind verschiedene Ausführungen von Latent-Wärmespeichern bekannt. In vorteilhafter Ausführungsform ist beim Kühlkreislauf ein Latent-Wärmespeicher vorhanden, der entweder direkt vom Kühlmedium durchströmt wird und somit eine größere Masse des Kühlmediums für eine weitgehend konstante Temperatur sorgt oder es wird im Latent-Wärmespeicher ein Wärmetauscher eingesetzt, den das Kühlmedium durchströmt. Dieser Aufbau ist geringfügig aufwendiger in der Anlagentechnik, jedoch erlaubt dies die Verwendung besser geeigneter Speichermedien im Latent-Wärmespeicher.

In einfacher Ausführung durchströmt bei Vorhandensein eines Latent-Wärmespeichers das Kühlmedium immer im Kreislauf auch den Latent-Wärmespeicher. Jedoch ist es besonders vorteilhaft, wenn der Kühlkreislauf schaltbar ist. Zu diesem Zwecke sind die verschiedenen Elemente im Kühlkreislauf mit Umwälzpumpe, Aufnahme-Wärmetauscher, Latent-Wärmespeicher und Abgabe-Wärmetauscher jeweils mit Rohrverbindungen verbunden, deren Durchfluss wiederum mittels Ventilen schaltbar ist. Dieses ermöglicht die folgenden Strömungen:

In einem ersten Schaltungszustand kann das Kühlmedium von der Umwälzpumpe angetrieben den Aufnahme-Wärmetauscher und den Abgabe-Wärmetauscher durchfließen. Der Latent-Wärmespeicher ist vom Kühlkreislauf abgekoppelt. Dieser Zustand wird gewählt, sofern der Bedarf an Wärmeenergie am Abgabe-Wärmetauscher der Wärmekapazität beim Aufnahme-Wärmetauscher entspricht, jedoch im Latent-Wärmespeicher keine Wärmeenergie gespeichert ist.

In einem zweiten Schaltungszustand kann das Kühlmedium sequenziell von der Umwälzpumpe angetrieben den Aufnahme-Wärmetauscher, den Latent-Wärmespeicher und den Abgabe-Wärmetauscher durchfließen. Dieser Zustand ist im Gegensatz zur vorherigen Schaltung vorteilhaft, sofern im Latent-Wärmespeicher eine ausreichende Wärmeenergie gespeichert ist. Insbesondere gilt dies sofern die Zufuhr oder der Verbrauch von Wärmeenergie laufend schwankt.

In einem dritten Schaltungszustand kann das Kühlmedium sequenziell von der Umwälzpumpe angetrieben den Aufnahme-Wärmetauscher und den Abgabe-Wärmetauscher durchfließen, wobei der Latent-Wärmespeicher parallel zum Aufnahme-Wärmetauscher vom Kühlmedium durchflossen wird. Diese Schaltung kann sinnvoll sein, sofern im Latent-Wärmespeicher eine hohe Wärmeenergie gespeichert ist und der Verbrauch im Abgabe-Wärmetauscher größer ist als die Zufuhr im Aufnahme-Wärmetauscher.

In einem vierten Schaltungszustand kann das Kühlmedium sequenziell von der Umwälzpumpe angetrieben den Aufnahme-Wärmetauscher und den Abgabe-Wärmetauscher durchfließen, wobei der Latent-Wärmespeicher parallel zum Abgabe-Wärmetauscher vom Kühlmedium durchflossen wird. Diese Schaltung kann sinnvoll sein, sofern im Latent-Wärmespeicher eine geringe Wärmeenergie gespeichert ist und der Verbrauch im Abgabe-Wärmetauscher geringer ist als die Zufuhr im Aufnahme-Wärmetauscher.

In einem fünften Schaltungszustand kann das Kühlmedium von der Umwälzpumpe angetrieben den Latent-Wärmespeicher und den Abgabe-Wärmetauscher durchfließen. Der Aufnahme-Wärmetauscher ist vom Kühlkreislauf abgekoppelt. Dieser Zustand wird gewählt, sofern im Latent-Wärmespeicher Wärmeenergie gespeichert ist, jedoch keine Zufuhr im Aufnahme-Wärmetauscher erfolgt.

In einem sechsten Schaltungszustand kann das Kühlmedium von der Umwälzpumpe angetrieben den Latent-Wärmespeicher und den Aufnahme-Wärmetauscher durchfließen. Der Abgabe-Wärmetauscher ist vom Kühlkreislauf abgekoppelt. Dieser Zustand wird gewählt, sofern im Latent-Wärmespeicher keine bzw. geringe Wärmeenergie gespeichert ist, jedoch kein Bedarf an Wärmeenergie im Abgabe-Wärmetauscher vorhanden ist.

In weiterer Ausführung ist es vorteilhaft, wenn die Ventile und/oder die Umwälzpumpe derart gesteuert werden können, dass der Verbrauch von Wärmeenergie geregelt werden kann. Insbesondere ist die Regelung einer konstanten Temperatur nach dem Abgabe-Wärmetauscher besonders vorteilhaft, weil somit eine maximale Wärmeenergieaufnahme ermöglicht wird. Hierzu wird die Temperatur vorzugsweise im Bereich zwischen der Schmelztemperatur und der Erstarrungstemperatur des spezifischen Kühlmediums eingestellt.

Die erfindungsgemäße Ausführung ist besonders vorteilhaft für die Verwendung bei Erdwärmesonden als Aufnahme-Wärmetauscher geeignet. Aufgrund der in der Regel konstanten Erdtemperatur kann somit die vorteilhafte Ausführung mit den Anforderungen aus der aufgezeigten Lösung, insbesondere einer konstanten Temperaturführung, realisiert werden.

Die Übergabe der Wärmeenergie vom Kühlmedium aus dem Kühlkreislauf in das Pumpmedium in der Wärmepumpe kann auf verschiedene Weisen erfolgen. Somit gibt es unter anderem die Möglichkeit, den Abgabe-Wärmetauscher in Art eines Wärmetauschbehältnisses zu gestalten. In diesem Falle ist es möglich, zum einen das Pumpmedium oder bevorzugt das Kühlmedium direkt durch das Wärmetauschbehältnis zu leiten. Durch diese Gestaltung besitzt das Wärmetauschbehältnis zudem eine Wärmepufferfunktion.

Beim Wärmetauschbehältnis wird das jeweils andere Medium oder es werden beide Medien in Wärmetauscherkanälen geführt. In der einfachen Ausführung wird der Verdampfer des Pumpkreislaufes in das Wärmetauschbehältnis integriert. Insofern wird die Wärmeenergie im Wärmetauschbehältnis vom Kühlmedium auf das Pumpmedium übertragen. Bevorzugt wird hierbei das Pumpmedium beim Verdampfer in Wärmetauscher-Kanälen geführt.

Je nach Aufbau und Anordnung der Heizungsanlage kann es aber auch erforderlich sein, die Wärmepumpe vom Kühlkreislauf zu trennen. In diesem Falle wird ein Trennkreislauf zwischengeschaltet. Hierbei durchströmt ein Trennmedium den Trennkreislauf und überträgt die Wärmeenergie vom Kühlkreislauf über den Abgabe-Wärmetaucher auf das Trennmedium und vom Trennmedium über den Verdampfer auf den Pumpkreislauf. Je nach den sich ausbildenden Strömungsverhältnissen kann eine Umwälzpumpe erforderlich werden. Als Trennmedium wird bevorzugt ein Wasser-Glykol-Gemisch eingesetzt. Gleichfalls können aber auch andere Medien zum Einsatz kommen. Zur Stabilisierung der Temperatur kann auch im Trennkreislauf ein Wärmespeicher zum Einsatz kommen. Die Übergabe der Wärmeenergie kann wiederum durch verschiedenartige Wärmetauscher ermöglicht werden. So ist es möglich, beide Medien in Kanälen zu führen, als auch ein Medium in Kanälen geführt ein Behältnis durchströmen zu lassen, wobei das zweite Medium das Behältnis direkt durchströmt.

Die Wärmepumpe arbeitet nach der bekannten Funktionsweise, bei der durch den Kompressor das Pumpmedium verdichtet wird und in Folge mit erhöhter Temperatur den Verflüssiger durchströmt. Das Pumpmedium wird im Verflüssiger auf Grund der Wärmeabgabe abgekühlt. Folgend wird das Pumpmedium zu einem Expansionsventil geleitet, wo es durch die Druckreduzierung stark abkühlt. Das somit deutlich kältere Pumpmedium wird im Verdampfer erhitzt und gelangt wiederum zum Kompressor.

Beim Verflüssiger wird die Wärmeenergie vom Pumpmedium auf ein Heizmedium übertragen. Das Heizmedium wird zu diesem Zwecke in einem Heizkreislauf geführt, der zumindest einen Erhitzer und eine Heizeinrichtung umfasst. In aller Regel wird es sich um eine Raumbeheizung handeln. Insofern ist üblicher Weise das Heizmedium Wasser, welches Heizkörper als Heizeinrichtung durchströmt. Im Heizkreislauf kann zur Förderung des Heizmediums eine Umwälzpumpe vorhanden sein.

Die Übertragung der Wärmeenergie vom Pumpmedium auf das Heizmedium erfolgt vom Verflüssiger, den das Pumpmedium durchströmt, über den Erhitzer, den das Heizmedium durchströmt, zum Heizmedium.

Hierbei können für den Verflüssiger bzw. Erhitzer verschiedenartige Aufbauten an Wärmetauschern gewählt werden. Insofern kommen vergleichbare Aufbauten, wie beim Verdampfer, in Betracht. Vorteilhafter Weise wird das Pumpmedium wiederum in Kanälen geführt. Das Heizmedium kann zum einen ein Wärmetauschbehältnis direkt durchströmen und somit befindet sich der Verflüssiger im Wärmetauschbehältnis. A1-ternativ kann gleichfalls das Heizmedium in Kanälen geführt sein und somit können Verflüssiger und Erhitzer als Wärmetauscher in einem Wärmetauschbehältnis angeordnet sein. Es käme aber auch in Betracht, beide Medien in einem Wärmetauscher ohne Behälter in Kanälen zu führen. In diesem Falle würde ein Wärmetauscher Verdampfer und Erhitzer bilden.

Zur weiteren Steigerung der Wärmetransportleistung ist es möglich, auch im Heizkreislauf ein Stoffgemisch mit Paraffin einzusetzen, wenn gleich in der Regel nur Wasser Verwendung finden wird.

Des Weiteren ist es natürlich möglich, auch im Heizkreislauf einen Wärmespeicher einzusetzen oder auch eine Mehrzahl an Wärmespeichern im Kühl-, Trenn- oder Heizkreislauf.

Die folgenden Figuren skizzieren schematisch verschiedene Anordnungen der einzelnen Komponenten.

Es zeigen:
- Fig. 1: ein Schema für ein Ausführungsbeispiel einer erfinderischen Heizungsanlage;
- Fig. 2: ein Schema für eine mögliche Leitung des Kühlkreislaufes;
- Fig. 3: eine weitere Ausführungsform für die Wärmepumpe;
- Fig. 4: eine weitere Ausführungsform für die Wärmepumpe.

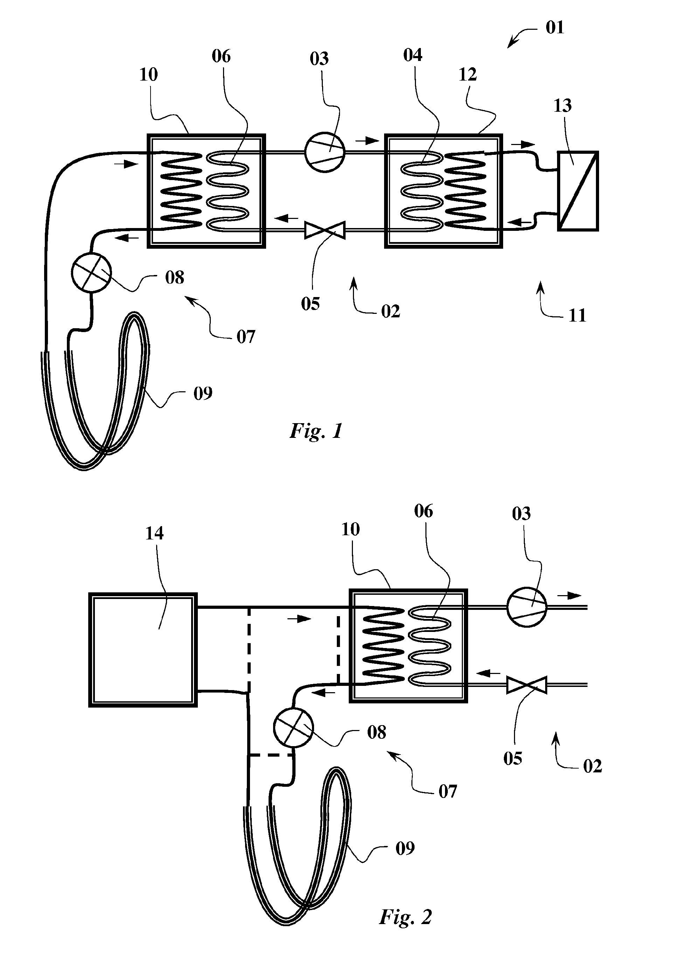

In **Figur 1** ist schematisch ein Ausführungsbeispiel für eine erfinderische Heizungsanlage 01 dargestellt. Wie beschrieben besteht in einfacher Ausführungsform die Heizungsanlage 01 aus drei getrennten Kreisläufen 02, 07, 11. Auf der linken Seite dargestellt befindet sich der Kühlkreislauf 07 mit einer Umwälzpumpe 08, welche den Flüssigkeitsstrom sicherstellt. Nachfolgend ist ein Aufnahme-Wärmetauscher 09 angeordnet, welcher bevorzugt eine Erdwärmesonde ist. Im Kühlkreislauf strömt das Kühlmedium, welches in der erfinderischen Ausführung zumindest anteilig Paraffin enthält. Die im Aufnahme-Wärmetauscher 09 aufgenommene Wärmeenergie wird im Abgabe-Wärmetauscher 10 wiederum abgegeben. In diesem Beispiel besteht der Abgabe-Wärmetauscher aus einem Behältnis, in dem das Kühlmedium in Kanälen hindurchgeführt wird.

Den mittleren Kreislauf bildet die Wärmepumpe 02. Hierbei wird ein Pumpmedium von einem Kompressor 03 angetrieben in einem Kreislauf bewegt. Das komprimierte Pumpmedium mit erhöhter Temperatur durchströmt nach dem Kompressor 03 einen Verflüssiger 04. Anschließend kühlt das Pumpmedium nach einem Druckabbau durch ein Expansionsventil 05 weiter ab. Das derart abgekühlte Pumpmedium wird durch einen Verdampfer 06 geführt, wo es die Wärmeenergie wiederum aufnimmt und sich dessen Temperatur erhöht. In der Regel wird das Pumpmedium im Verdampfer 06 als auch im Verflüssiger 04 in Kanälen geführt. Im Ausführungsbeispiel werden beide Komponenten in Form von Wärmetauschern in Behältnissen zur Übergabe der Wärmeenergie angeordnet, d.h. der Verdampfer 06 im Abgabe-Wärmetauscher 10 und der Verflüssiger 04 in einem Erhitzer 12.

Rechter Hand dargestellt befindet sich der beispielhafte Heizkreislauf 11 bestehend aus dem Erhitzer 12 und einer Heizeinrichtung 13. In diesem Kreislauf 11 wird ein Heizmedium gefördert. Hierzu kann gleichfalls im Kreislauf 11 eine Umwälzpumpe angeordnet sein. Der Erhitzer 12 ist gleichfalls als Behältnis dargestellt, in dem das Heizmedium in Kanälen geführt wird.

In der **Figur 2** ist ein Kühlkreislauf 07 mit einem zusätzlichen Wärmespeicher 14 dargestellt. Zur Erzielung einer vorteilhaften Flexibilität und möglichst konstanter Temperaturführung des Kühlmediums, insbesondere nach dem Abgabe-Wärmetauscher 10, sind verschiedene Wege für das Kühlmedium schaltbar. In der skizzierten Ausführung durchströmt das Kühlmedium sequenziell nach der Umwälzpumpe 08 den Aufnahme-Wärmetauscher 09, den Wärmespeicher 14 und den Abgabe-Wärmetauscher 10. Gleichfalls kann mittels Ventilen (nicht dargestellt) die Strömung derart verändert werden, dass beispielsweise nach der Umwälzpumpe direkt der Wärmespeicher und folgend der Abgabe-Wärmetauscher durchströmt werden kann. Weitere Schaltzustände und Führungen für das Kühlmedium sind leicht erkennbar.

In einfachster Ausführungsform durchströmt das Kühlmedium den Wärmespeicher 14 direkt. Insofern erhöht der Wärmespeicher 14 die Masse des umlaufenden Kühlmediums und trägt somit zur Stabilisierung des Temperaturprofils bei. Es wäre aber gleichfalls auch möglich, das Kühlmedium ebenso in Kanälen geführt durch den Wärmespeicher 14 zu leiten und im Wärmespeicher 14 ein für die dort vorwiegend herrschende Temperatur optimales Speichermedium einzusetzen.

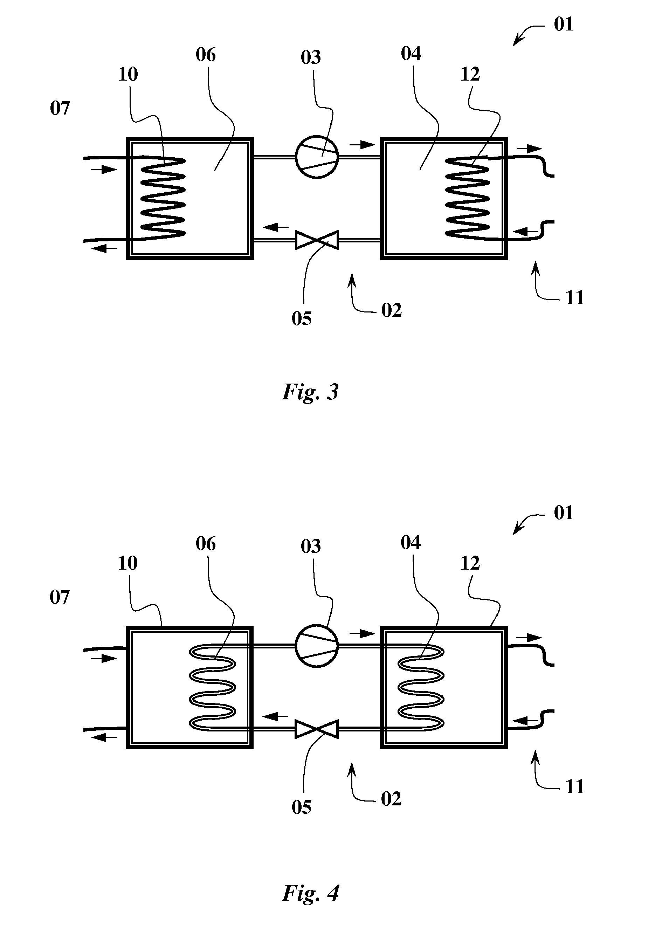

Die **Figur 3** skizziert eine alternative Führung des Pumpmediums beim Abgabe-Wärmetauscher 10 sowie beim Erhitzer 12. Es ist entgegen der Übertragung der Wärmeenergie aus dem Beispiel von Fig. 1 auch möglich, den Verdampfer 06 und den Verflüssiger 04 als Behälter auszubilden, welche vom Pumpmedium direkt durchflossen werden. In diesem Falle würden der Abgabe-Wärmetauscher 10 und der Erhitzer 12 aus Rohrführungen oder dergleichen gebildet, in denen das Kühl- bzw. Heizmedium geführt wird.

Die **Figur 4** zeigt eine zu Fig. 3 alternative gegensätzliche Ausführungsform. Hierbei sind, wie bei einer Wärmepumpe 02 in der Regel üblich, der Verdampfer 06 und der Erhitzer 04 als Wärmetauscher mit einer rohrartigen Kanalführung ausgebildet. Diese befinden sich jeweils in Behältnissen, welche zum einen aus dem Abgabe-Wärmetauscher 10 mit direkter Durchströmung mit dem Kühlmedium sowie dem Erhitzer 12 mit direkter Durchströmung mit dem Heizmedium gebildet werden.

Abgeleitet von den skizzierten Beispielen ist offensichtlich, dass es für die erfinderische Lösung nicht darauf ankommt, wie exakt die einzelnen Kreisläufe geführt werden und wie die Wärmeübertragung vom Kühlmedium auf das Pumpmedium und vom Pumpmedium auf das Heizmedium realisiert wird. Maßgeblich für die erfinderische Ausführung ist die Einsetzung eines Kühlmediums bestehend aus einem Stoffgemisch, welches Paraffin enthält, wobei von einem Kühlkreislauf die Wärmeenergie, ggf. über einen Trennkreislauf, auf ein Pumpmedium in einer Wärmepumpe und von dort in einen Heizkreislauf übertragen wird.

Somit ist es ebenso möglich, zwischen den drei erforderlichen Kreisläufen weitere Kreisläufe zwischen zu schalten. Somit wäre es beispielhaft möglich, die Wärmeenergie vom Kühlkreislauf zu einem Trennkreislauf zu übertragen und von dort zur Wärmepumpe.

Anstelle der skizzierten Behälter zur Übergabe der Wärmeenergie ist es gleichfalls möglich, einen Wärmetauscher einzusetzen, in dem beide Flüssigkeiten lediglich getrennte Kanäle durchströmen und kein Speichermedium eingesetzt wird.

## Patentansprüche

1. Heizungsanlage (01) zur Übertragung von Wärmeenergie mit einer Wärmepumpe, umfassend zumindest drei getrennte Kreisläufe,
- wobei in einem Kühlkreislauf (07) ein Kühlmedium zirkuliert,
- wobei in einem Pumpkreislauf (02), realisiert durch eine Wärmepumpe, ein Pumpmedium zirkuliert, und
- wobei in einem Heizkreislauf (11) ein Heizmedium zirkuliert, wobei Wärmeenergie vom Kühlmedium zum Pumpmedium und vom Pumpmedium zum Heizmedium übertragen werden kann,
**dadurch gekennzeichnet,**
**dass** das Kühlmedium aus einem Stoffgemisch besteht, wobei das Stoffgemisch Paraffin enthält, und wobei das Stoffgemisch einen Schmelzpunkt von unter 25°C besitzt.

2. Heizungsanlage (01) nach Anspruch 1,
**dadurch gekennzeichnet,**
**dass** das Stoffgemisch ab einer Grenztemperatur eine Wärmespeicherkapazität von über 20 kJ/kg, insbesondere über 150 kJ/kg, aufweist, wobei die Grenztemperatur in einem Bereich zwischen -5°C und 25°C, insbesondere zwischen 0°C und 10°C oder zwischen 15°C und 25°C, liegt.

3. Heizungsanlage (01) nach Anspruch 1 oder 2,
**dadurch gekennzeichnet,**
**dass** der Kühlkreislauf (07) zumindest eine Umwälzpumpe (08), einen Aufnahme-Wärmetauscher (09) und einen Abgabe-Wärmetauscher (10) umfasst, wobei Wärmeenergie im Aufnahme-Wärmetauscher (09) auf das Kühlmedium übertragen werden kann und im Abgabe-Wärmetauscher (10) abgegeben werden kann.

4. Heizungsanlage (01) nach einem der Ansprüche 1 bis 3,
**dadurch gekennzeichnet,**
**dass** dem Kühlkreislauf (07) ein Latent-Wärmespeicher (14) zugeordnet ist, wobei das Kühlmedium direkt oder mittels eines Wärmetauschers indirekt den Latent-Wärmespeicher (14) durchfließen kann.

5. Heizungsanlage (01) nach einem der Ansprüche 1 bis 4,
**dadurch gekennzeichnet,**
**dass** der Kühlkreislauf (07) mittels Ventilen derart schaltbar ist, dass das Kühlmedium einen Teil oder alle der Komponenten Umwälzpumpe (08), Aufnahme-Wärmetauscher (09), Abgabe-Wärmetauscher (10) oder Latent-Wärmespeicher (14) sequenziell und/oder parallel durchströmen kann, wobei durch die Schaltung der Ventile und/oder Regelung der Umwälzpumpe (08) die Übertragung von Wärmeenergie stufenlos einstellbar ist.

6. Heizungsanlage (01) nach Anspruch 5,
**dadurch gekennzeichnet,**
**dass** die Temperatur des Kühlmediums nach dem Abgabe-Wärmetauscher (10) auf einen Sollwert einstellbar ist.

7. Heizungsanlage (01) nach einem der Ansprüche 3 bis 6,
**dadurch gekennzeichnet,**
**dass** der Aufnahme-Wärmetauscher (09) aus einer im Erdreich verlegten Erdwärmesonde gebildet wird.

8. Heizungsanlage (01) nach einem der Ansprüche 3 bis 6,
**dadurch gekennzeichnet,**
**dass** der Abgabe-Wärmetauscher (10) von einem Wärmetauschbehältnis gebildet wird, wobei das Wärmetauschbehältnis (10) eine Wärmepufferfunktion besitzt und wobei das Kühlmedium das Wärmetauschbehältnis (10) direkt oder in Kanälen durchströmt.

9. Heizungsanlage (01) nach einem der Ansprüche 1 bis 8,
**dadurch gekennzeichnet,**
**dass** die Wärmepumpe einen Verdampfer (06) umfasst, wobei im Verdampfer (06) Wärmeenergie auf das Pumpmedium übertragen werden kann und wobei der Verdampfer (06) im Wärmetauschbehältnis (10) angeordnet ist.

10. Heizungsanlage (01) nach einem der Ansprüche 1 bis 9,
**dadurch gekennzeichnet,**
**dass** die Wärmepumpe einen Verdampfer (06) umfasst, wobei im Verdampfer (06) Wärmeenergie auf das Pumpmedium übertragen werden kann, wobei der Abgabe-Wärmetauscher (10) mit dem Verdampfer (06) über einen Trennkreislauf gekoppelt ist und wobei Wärmeenergie im Abgabe-Wärmetauscher (10) auf ein Trennmedium übertragen und beim Verdampfer (06) vom Trennmedium auf das Pumpmedium übertragen wird.

11. Heizungsanlage (01) nach einem der Ansprüche 1 bis 10,
**dadurch gekennzeichnet,**
**dass** die Wärmepumpe einen Verflüssiger (04) umfasst, wobei der Heizkreislauf (11) zumindest einen Erhitzer (12) und eine Heizeinrichtung (13) umfasst und wobei Wärmeenergie vom Pumpmedium über den Verflüssiger (04) und den Erhitzer (12) auf das Heizmedium übertragen werden kann.

12. Verfahren zur Übertragung von Wärmeenergie, insbesondere aus natürlichen Wärmequellen, unter Verwendung einer Heizungsanlage (01) gemäß einem der vorhergehenden Ansprüche,
**dadurch gekennzeichnet,**
**dass** das Kühlmedium im Abgabe-Wärmetauscher (10) auf eine Temperatur oberhalb der spezifischen Erstarrungstemperatur und unterhalb der spezifischen Schmelztemperatur abgekühlt wird.
